# EUROPÄISCHE PATENTANMELDUNG

(11) **EP 1 536 218 A1**
(43) Veröffentlichungstag der Anmeldung: **01.06.2005**
(21) Anmeldenummer: 04024591.2
(22) Anmeldetag: 15.10.2004
(51) Int. Cl.: G01L 5/00

(54) **Messvorrichtung**

(30) Priorität: 27.11.2003 DE 10355536
(71) Anmelder: Rainer GmbH, 51145 Köln (DE)
(72) Erfinder: Rainer, Heinz, 51145 Köln (DE)
(74) Vertreter: Mann, Volker, Dr.

(57) **Zusammenfassung**

In einer Messvorrichtung kann die Belastbarkeit eines Systems mit Verzurrbänder für Ladungsträger, bei der der Ladungsträger und das Ladegut simuliert und die auf die Verzurrbänder wirkenden Kräfte bestimmt werden, gemessen werden.

## Beschreibung

Die Erfindung betrifft eine Messvorrichtung zur Bestimmung der Belastbarkeit eines Verzurrsystems für Ladungsträger.

Transportbedingte Belastungen durch Bewegungen von Transportgütern auf Lastkraftwagen, Flugzeugen, Bahn oder Schiff führen immer wieder zu hohen Schaden an Gütern, wenn die Ladegüter auf dem Ladungsträger nicht oder nicht ausreichend vor Verschiebung gesichert werden. Vielfach wird der Ladungsträger mit Ladungsgütern geladen und ohne Sicherung versandt.

Übliche Sicherungen sind Verzurrbänder unterschiedlicher Konsistenz mit dem Ziel der Bildung von Gruppen oder Blöcken, die zusammengefaßt eine Bewegung des Ladegutes verhindern sollen. Dies gelingt nur schwer, weil z. B. Formschluss mit den Wänden des Ladungsträgers nicht erzielt werden kann und damit eine Bewegung einer ganzen Gruppe von Ladeeinheiten möglich ist.

Mit speziellen Verzurrsystemen sollen die im Ladungsträger entstehenden Kraftwirkungen an die für die Aufnahme solcher Kräfte vorgesehenen Verzurrösen an stabile Eckpfeiler des Ladungsträgers abgeleitet werden. Solche Verzurrsysteme können nicht einfach nur die Entwicklung von Bruchfestigkeitswerten der eingesetzten Wände bewertet werden. Vielmehr sind als Kriterien für die Bewertung eines Verzurrsystems die Art der Ladeeinheit oder Verpackung sowie die Form der kompletten Ladungseinheit mit zu berücksichtigen.

Das Verzurrsystem muss in der Lage sein, die Ladungseinheit in Ladungsträger während des kompletten Transportverlaufs so zu sichern, dass entstehende Kraftwirkungen keine Schäden verursachen können.
Deshalb muss das Verzurrsystem produktspezifisch bzw. dem Ladegut entsprechend angepaßt sein. Es soll im Rahmen des Transportvorgangs auftretende Kräfte im Rahmen einer überschaubaren plastischen und elastischen Verformung ableiten können.

Die Ladungssicherung auf Straßenfahrzeugen wird in DIN EN 12640 und in der VDI Richtlinie VDI 2700 beschrieben.

Es ist Aufgabe der vorliegenden Erfindung eine Messvorrichtung zur Verfügung zu stellen, bei der die auf die Verzurrbänder wirkenden Kräfte einschließlich deren Längendehnung und Anordnung in Abhängigkeit von dem Ladungsträger und dem Ladegut bestimmt werden.

Es wurde eine Messvorrichtung zur Bestimmung der Belastbarkeit eines Verzurrsystems für Ladungsträger gefunden, umfassend
- zwei geometrisch veränderbare Stahlprofilkörper (1, 2) zur Simulation des jeweiligen Ladungsträgers und des jeweiligen Ladeguts,
- eine zwischen den beiden Stahlprofilkörpern (1, 2) angeordnete Vorrichtung zur Simulation der Belastung des Ladesguts mit einem Messpunkt P, an dem die auf das Ladegut wirkende Kraft bestimmt wird,
- vier Befestigungsösen (6), die an einem der Stahlprofilkörper (1, 2) angebracht sind,
- wobei der das Ladegut simulierende Stahlprofilkörper mit Verzurrbändern (7) an den Ösen (6) befestigt ist,
- wobei an vorbestimmten Messpunkten L die Längendehnung der Verzurrbänder (7) gemessen wird,
- wobei an den Messpunkten F die auf die Befestigungspunkte der Verzurrbänder (7) wirkende Kraft gemessen wird.

Die erfindungsgemäße Messvorrichtung ermöglicht eine der Praxis entsprechende Simulation der Verzurrung eines Ladegutes auf einem Ladungsträger. Im Besonderen ist es möglich, in Abhängigkeit von der zur erwartenden Belastung des Ladegutes Qualität und Konstruktion von Verzurrsystemen zu bestimmen (Lashings). Die erfindungsgemäße Meßvorrichtung ermöglicht auch eine optimale Anordnung der Verzurrbänder im Ladungsträger und am Ladegut zu ermitteln.

Ladungsträger im Rahmen der vorliegenden Erfindung können Transportvorrichtungen für Ladegut sein, bei denen das Ladegut mittels Verzurrbändern an dem Ladungsträger befestigt werden kann.

Übliche Ladungsträger im Rahmen der vorliegenden Erfindung sind Transportvorrichtungen, bei denen die Verzurrbänder an Befestigungspunkten, z.B. an Ösen der Transportvorrichtung befestigt werden können und so das Ladegut sichern.

Die Befestigungspunkte sind in der Regel symmetrisch im Ladungsträger angebracht, so dass sich die auf das Ladegut wirkenden Kräfte gleichmäßig verteilen. Zur Sicherung des Ladegutes sind daher in der Regel mindesten vier Befestigungspunkte pro Verzurrsystem erforderlich.

Ladungsträger im Rahmen der vorliegenden Erfindung können beispielsweise Lastwagen, Container und Ladeflächen in Flugzeugen oder Schiffen sein.

Das Ladegut im Rahmen der vorliegenden Erfindung kann homogen gestapelt in Form von Fässern oder Kisten sein, kann aber auch inhomogen aus verschiedenen Bestandteilen bestehen.

In der erfindungsgemäßen Messvorrichtung simulieren zwei Stahlprofilkörper den Ladungsträger und das Ladegut. Die Dimensionen der Stahlprofilkörper entsprechen dabei den Dimensionen des Ladungsträgers und des Ladegutes.

Zum Aufbau der erfindungsgemäßen Messvorrichtung können handelsübliche Stahlprofile verwendet werden.

Gemäß der vorliegenden Erfindung besteht die erfindungsgemäße Messvorrichtung aus zwei Stahlprofilkörpern zwischen die eine Vorrichtung zur Simulation einer Belastung des Ladegutes während des Transports angebracht ist. Die Stahlprofilkörper können in der Länge variiert werden.

Die Vorrichtung zur Simulation einer Belastung des Ladegutes soll die Kräfte erzeugen, die z.B. bei dem Transport auf das Ladegut wirken. Die Simulation einer Belastung des Ladegutes kann beispielsweise mechanisch über Hebel, durch einen Elektromotor oder durch eine Luftkammer (Airbag) erfolgen.

Im Rahmen der vorliegenden Erfindung ist es bevorzugt, wenn die Simulation einer Belastung des Ladegutes durch eine Luftkammer erfolgt, die zwischen den beiden Stahlprofilkörpern angeordnet ist.

Durch Aufpumpen der Luftkammer kann die Belastung des Ladegutes variiert werden.

Aus dem Druck und der auf einem Stahlprofilkörper aufliegenden Fläche (Aufnehmer), z.B. eine Holzplatte, der Luftkammer kann die jeweils auf das Ladegut wirkende Kraft eingestellt werden. Die Druckmessung kann beispielsweise über ein Druckmanometer erfolgen.

Der das Ladegut simulierende Stahlprofilkörper ist über die Verzurrsysteme an den Befestigungspunkten verankert.

Im Rahmen der vorliegenden Erfindung soll die Konstruktion und Qualität der Verzurrsysteme zur Sicherung des Ladegutes bestimmt werden.

Es kommen hierbei handelsübliche und gegebenenfalls neu entwickelte Gurtbandqualitäten zum Einsatz.

In einer besonderen Ausführungsform der Ladungssicherung werden die Verzurrbänder je nach Größe des Ladegutes in verschiedenen Höhen in der Regel waagrecht über das Ladegut gespannt und über Knotenpunkte zu einem von vier Befestigungspunkten (Verzurrösen) geführt. Das senkrechte Verzurrband ist in einem Winkel von etwa 45° mit dem jeweiligen Befestigungspunkt verbunden.

An den Befestigungspunkten der Verzurrbänder der erfindungsgemäßen Messvorrichtung wird die auf den jeweiligen Befestigungspunkt wirkende Kraft gemessen. Die Kraftmessung kann beispielsweise durch einen elektronischen Kraftaufnehmer erfolgen.

Eine weitere kritische Größe für die Qualität der Verzurrbänder zur Sicherung des Ladegut ist die Längendehnung der Verzurrbänder bei Belastung. Hierzu ist je ein Messpunkt an beiden Stahlprofilkörpern angebracht. Die Vergrößerung des Abstands der beiden Meßpunkte bei Belastung gegenüber dem unbelasteten Zustand entspricht der Längendehnung der Verzurrbänder.

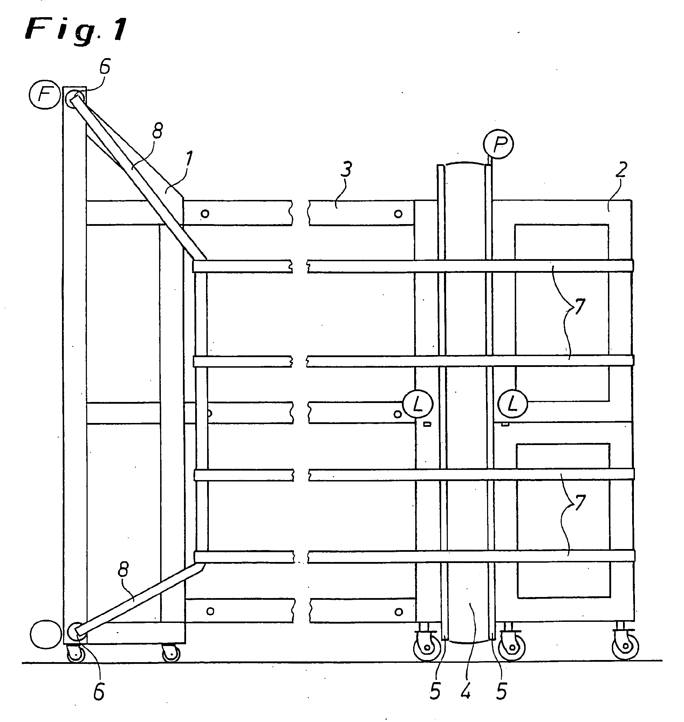

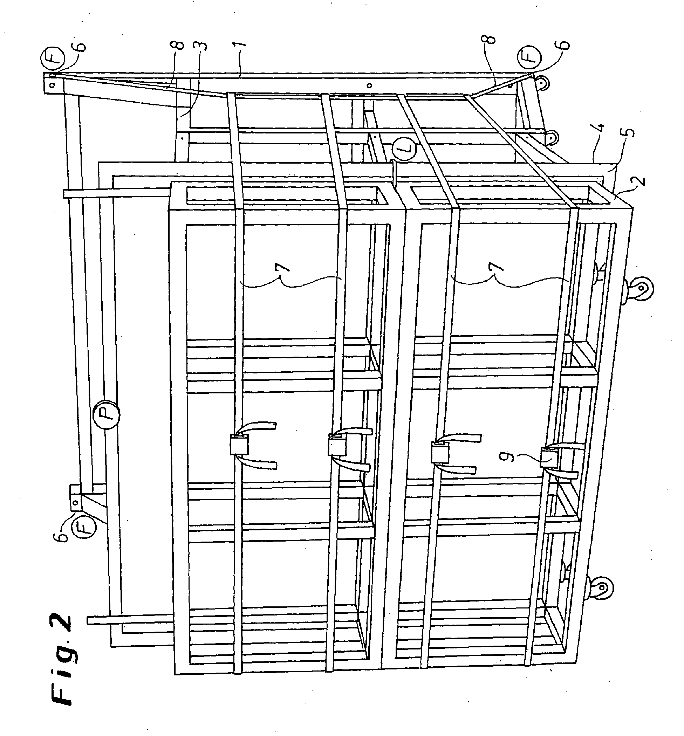

Die Erfindung kann mit Hilfe der Figuren 1 und 2 erläutert werden.

Fig. 1 zeigt die erfindungsgemäße Messvorrichtung in der Seitenansicht

Zwischen den Stahlprofilkörpern 1 und 2 (1 und 2) ist die Luftkammer (4) zwischen zwei Aufnehmern (5), z.B. Holzplatten, zur Auflage der Luftkammer (4) angeordnet. Die Stahlprofilkörper können durch das Verlängerungsteil (3) an jeder Seite variiert werden. Auf der einen Seite eines der Stahlprofilkörper sind auf jeder Seite zwei Befestigungsösen (6) angebracht. Die Verzurrbänder (7) umfassen die das Ladegut simulierenden Stahlprofilkörper (1 und 2). Die Verzurrbänder sind auf jeder Seite mit Verbindungsbändern (8) zusammengefaßt, die winklig mit den Befestigungsösen (6) verbunden sind. Die Verbindungsbänder können mittels Gurtschnallen (9) und Spannwerkzeugen gespannt werden.

An dem Messpunkt F wird die auf die Befestigungspunkte wirkende Kraft gemessen.

An den Messpunkten L wird die Längendehnung der Verzurrbänder (7) gemessen.

An dem Messpunkt P wird der Druck in der Luftkammer (4) und damit die auf das Ladegut wirkende Kraft bestimmt.

Fig. 2 zeigt eine perspektivische Darstellung der erfindungsgemäßen Messvorrichtu ng.

Zwischen den Stahlprofilkörpern 1 und 2 (1 und 2) ist die Luftkammer (4) zwischen zwei Aufnehmern (5), z.B. Holzplatten, zur Auflage der Luftkammer (4) angeordnet. Die Stahlprofilkörper können durch das Verlängerungsteil (3) an jeder Seite variiert werden. Auf der einen Seite eines der Stahlprofilkörper sind auf jeder Seite zwei Befestigungsösen (6) angebracht. Die Verzurrbänder (7) umfassen die das Ladegut simulierenden Stahlprofilkörper (1 und 2). Die Verzurrbänder sind auf jeder Seite mit Verbindungsbändern (8) zusammengefaßt, die winklig mit den Befestigungsösen (6) verbunden sind. Die Verbindungsbänder können mittels Gurtschnallen (9) und Spannwerkzeugen gespannt werden.

An dem Messpunkt F wird die auf die Befestigungspunkte wirkende Kraft gemessen.

An den Messpunkten L wird die Längendehnung der Verzurrbänder (7) gemessen.

An dem Messpunkt P wird der Druck in der Luftkammer (4) und damit die auf das Ladegut wirkende Kraft bestimmt.

Die erfindungsgemäße Vorrichtung ermöglicht die Prüfung von Verzurrsystemen nach folgenden Kriterien:
1. maximale Bruchfestigkeit des Verzurrsystems bei statischer Belastung
2. maximales elastisches Verhalten des Verzurrsystems pro Vorgang
3. maximale plastische Verformung des Verzurrsystems pro Vorgang
4. elastisches und plastisches Verhalten des Verzurrsystems bei Dauerbelastung
5. elastisches und plastisches Verhalten des Verzurrsystems bei dynamischer Belastung und entsprechend den Vorgaben von Intervall-Zeiten und Intervall-Belastungen.
6. praxisnahe Visualisierung der Werte Druck (Belastung), Kraft (an mehreren Messstellen des Verzurrsystems) und Weg (plastische und elastische Verschiebung) und der Zeit.

Es ist daher möglich, ein optimales Verzurrsystem für ein Ladegut auf einem Ladungsträger zur Verfügung zu stellen und auf diese Weise Unfälle zu vermeiden.

### BEZUGSZEICHENLISTE

- 1.: Stahlprofilkörper 1
- 2.: Stahlprofilkörper 2
- 3.: Verlängerungsteil
- 4.: Luftkammer
- 5.: Halterungen für die Luftkammer
- 6.: Befestigungsöse
- 7.: Verzurrbänder
- 8.: Verbindungsbänder
- 9.: Bandschnalle

- F: Meßpunkt für die Kraft
- L: Meßpunkt für die Längendehnung
- P: Meßpunkt für den Druck im Airbag

## Patentansprüche

1. Messvorrichtung zur Bestimmung der Belastbarkeit eines Verzurrsystems für Ladungsträger, umfassend
- zwei geometrisch veränderbare Stahlprofilkörper (1, 2) zur Simulation des jeweiligen Ladungsträgers und des jeweiligen Ladeguts,
- eine zwischen den beiden Stahlprofilkörpern (1, 2) angeordnete Vorrichtung zur Simulation der Belastung des Ladesguts mit einem Messpunkt P, an dem die auf das Ladegut wirkende Kraft bestimmt wird,
- vier Befestigungsösen (6), die an einem der Stahlprofilkörper (1, 2) angebracht sind,
- wobei der das Ladegut simulierende Stahlprofilkörper mit Verzurrbändern (7) an den Ösen (6) befestigt ist,
- wobei an vorbestimmten Messpunkten L die Längendehnung der Verzurrbänder (7) gemessen wird,
- wobei an den Messpunkten F die auf die Befestigungspunkte der Verzurrbänder (7) wirkende Kraft gemessen wird.

2. Messvorrichtung nach Anspruch 1, **dadurch gekennzeichnet, dass** die Dimensionen der Stahlprofilkörper (12) den Dimensionen des Ladeguts entsprechen.

3. Messvorrichtung nach einem der Ansprüche 1 oder 2, **dadurch gekennzeichnet, dass** eine Seite einer der Stahlprofilkörper durch Stahlprofile so vergrößert ist, dass er der Größe des Ladungsträgers entspricht.

4. Messvorrichtung nach einem der Ansprüche 1 bis 3, **dadurch gekennzeichnet, dass** die vier Ösen (6) zur Befestigung des Verzurrsystems an dem einen Stahlprofilkörper entsprechend den Befestigungspunkten in einem Ladungsträger angebracht sind.

5. Messvorrichtung nach einem der Ansprüche 1 bis 4, **dadurch gekennzeichnet, dass** die Simulation der Belastung des Ladeguts mechanisch über einen Hebel, durch einen Elektromotor oder durch eine Luftkammer (4) erfolgen kann

6. Messvorrichtung nach einem der Ansprüche 1 bis 4, **dadurch gekennzeichnet, dass** an verschiedenen Messpunkten die auf die Befestigungspunkte wirkende Kraft, die Längendehnung der Verzurrbänder und der Druck in der Luftkammer bestimmt wird.

7. Messvorrichtung nach einem der Ansprüche 1 bis 6, **dadurch gekennzeichnet, dass** sie zur Bestimmung der Konstruktion und Qualität der Verzurrbänder zur Sicherung des Ladeguts in Ladungsträgern verwendet wird.
